# EUROPEAN PATENT APPLICATION

(11) **EP 3 828 432 A1**
(43) Date of publication of application: **02.06.2021**
(21) Application number: 19212104.4
(22) Date of filing: 28.11.2019
(51) Int. Cl.: F16D 23/12, F16H 63/30

(54) **CLUTCH TRANSMISSION DEVICE**

(71) Applicant: Dands Co., Ltd., Taichung City 403 (TW)
(72) Inventor: CHANG, Cheng-Wei, Taichung City 403 (TW)
(74) Representative: Style, Kelda Camilla Karen

(57) **Abstract**

A clutch transmission device includes a casing (31), a transmission unit (4), an output unit (5) including an output shaft (51) extending along and rotatable about an axis (L), and a clutch unit (6) disposed between the transmission unit (4) and the output unit (5) . The transmission unit (4) includes a worm shaft (41) disposed in the casing (31) and driven by a motor (2) to rotate, and a worm gear (42) meshing with the worm shaft (41) . The clutch unit (6) includes a joint sleeve (61) slidably sleeved on the output shaft (51) and rotatable about the axis (L), and a switching rod (62) rotatably mounted to the casing (31) and operable to switch the joint sleeve (61) between connection and separation positions, where the joint sleeve (61) engages the worm gear (42) to co-rotate therewith and is separated from the worm gear (42), respectively.

## Description

The disclosure relates to a transmission device, more particularly to a clutch transmission device.

Generally, a motor is provided for driving a transmission device connected to a rotor of the motor to perform certain functions. When it is desired to stop force transmission from the rotor to the transmission device, a direct current (DC) braking module is employed to provide a braking force, which applies a torque counteracting that of the rotor to be stopped, to stop the rotor and thus the transmission device. However, the use of the DC braking module requires additional electricity and cost.

On the other hand, electricity supplied to the motor may be cut off to stop rotation of the rotor and thus the transmission device. However, since the moment inertia of the rotor is usually relatively large, it is necessary to take a relatively large amount of time to stop the rotor and the transmission device. Therefore, an object of the disclosure is to provide a clutch transmission device capable of alleviating at least one of the drawbacks of the conventional clutch transmission device.

According to an aspect of the present disclosure, a clutch transmission device is provided. The clutch transmission device includes a housing unit, a motor, a transmission unit, an output unit and a clutch unit. The housing unit includes a casing. The motor is disposed in the casing. The transmission unit includes a worm shaft disposed in the casing and driven by the motor to rotate, and a worm gear meshing with the worm shaft. The output unit includes an output shaft extending along an axis and rotatable about the axis. The clutch unit is disposed between the transmission unit and the output unit, and includes a joint sleeve and a switching rod. The joint sleeve is slidably sleeved on the output shaft and is rotatable about the axis. The switching rod is rotatably mounted to the casing and is operable to switch the joint sleeve between a connection position, where the joint sleeve engages the worm gear to co-rotate therewith, and a separation position, where the joint sleeve is separated from the worm gear.

Other features and advantages of the disclosure will become apparent in the following detailed description of the embodiments with reference to the accompanying drawings, of which:
FIG. 1 is a perspective view of a clutch transmission device according to a first embodiment of the present disclosure;
FIG. 2 is an exploded perspective view of the first embodiment;
FIG. 3 is a schematic top view of the clutch transmission device according to the first embodiment;
FIG. 4 is a schematic sectional view taken along line IV-IV in FIG. 3, illustrating a joint sleeve of the clutch transmission device according to the first embodiment at a connection position;
FIG. 5 is a schematic sectional view similar to FIG. 4 but illustrating the joint sleeve at a separation position;
FIG. 6 is an exploded perspective view of a clutch transmission device according to a second embodiment of the present disclosure;
FIG. 7 is a schematic sectional view of the second embodiment, illustrating a joint sleeve of the clutch transmission device according to the second embodiment at a connection position;
FIG. 8 is a schematic sectional view similar to FIG. 7 but illustrating the joint sleeve at the separation position;
FIG. 9 is an exploded perspective view of a clutch transmission device according to a third embodiment;
FIG. 10 is a schematic sectional view of the third embodiment, illustrating a joint sleeve of the clutch transmission device according to the third embodiment at a connection position; and
FIG. 11 is a schematic sectional view similar to FIG. 7 but illustrating the joint sleeve at the separation position.

Before the present disclosure is described in greater detail with reference to the accompanying embodiments, it should be noted herein that like elements are denoted by the same reference numerals throughout the disclosure.

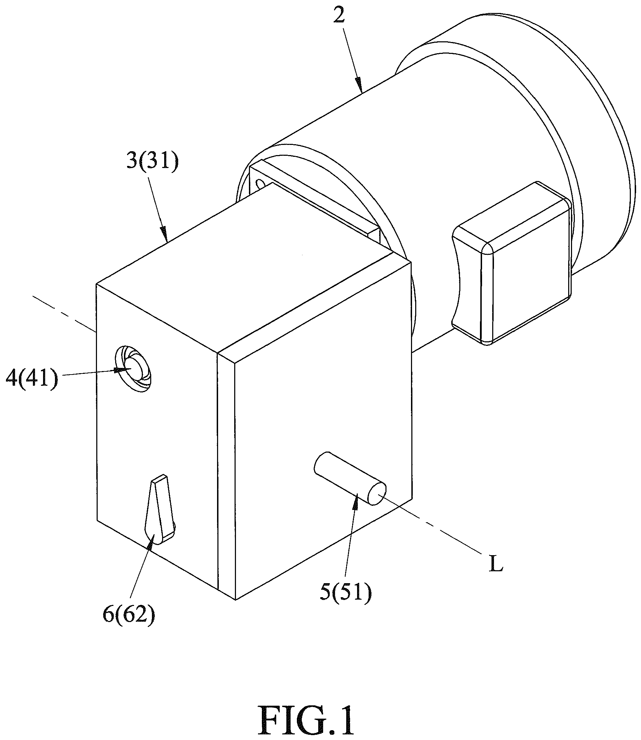

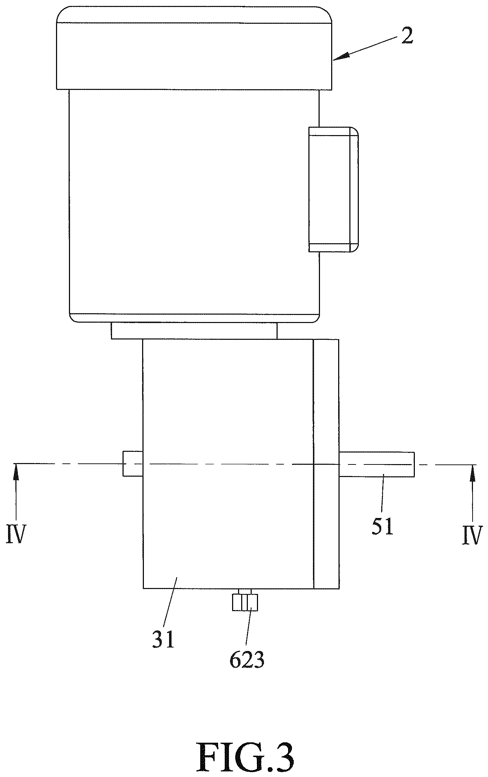

Referring to FIGS. 1 to 3, a clutch transmission device according to a first embodiment is shown. The clutch transmission device includes a motor 2, a housing unit 3, a transmission unit 4, an output unit 5 and a clutch unit 6.

The housing unit 3 includes a casing 31. The motor 2 is disposed in and is connected to the casing 31. In this embodiment, the casing 31 is a rectangular box made of metal but the present invention is not limited to this example.

The transmission unit 4 includes a worm shaft 41 disposed in the casing 31 and driven by the motor 2 to rotate, and a worm gear 42 meshing with the worm shaft 41. The worm gear 42 has two side surfaces 420 opposite to each other along an axis (L). One of the surfaces 420 facing toward the clutch unit 6 is formed with a plurality of indent portions 421 which are angularly and equidistantly spaced apart from one another about the axis (L). In this embodiment, the number of the indent portions 421 is four and the present disclosure is not limited to this example. Note that the configuration of the worm shaft 41 and the worm gear 42 may be replaced by a belt and pulley system, or a gear set, and may be any other transmission devices capable of performing the same function as those performed by the worm shaft 41 and the worm gear 42.

The output unit 5 includes an output shaft 51 extending along and rotatable about the axis (L), and a transmission key 52 disposed on the output shaft 51. The output shaft 51 includes a shaft body 511 extending along the axis (L), and formed with a keyway 512 that extending along the axis (L) . The transmission key 52 is inserted into the keyway 512 and has a portion protruding radially and outwardly from the keyway 512.

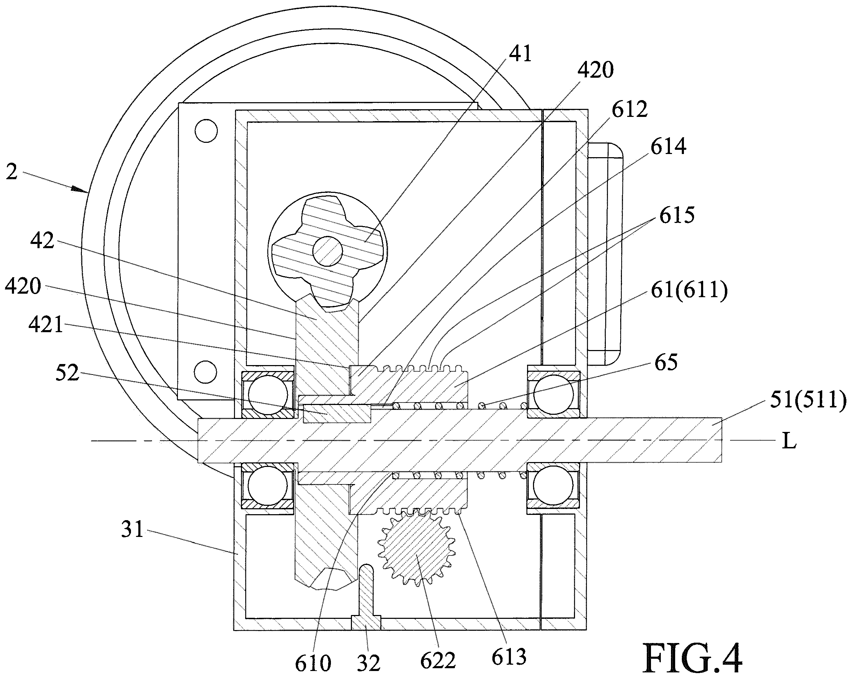

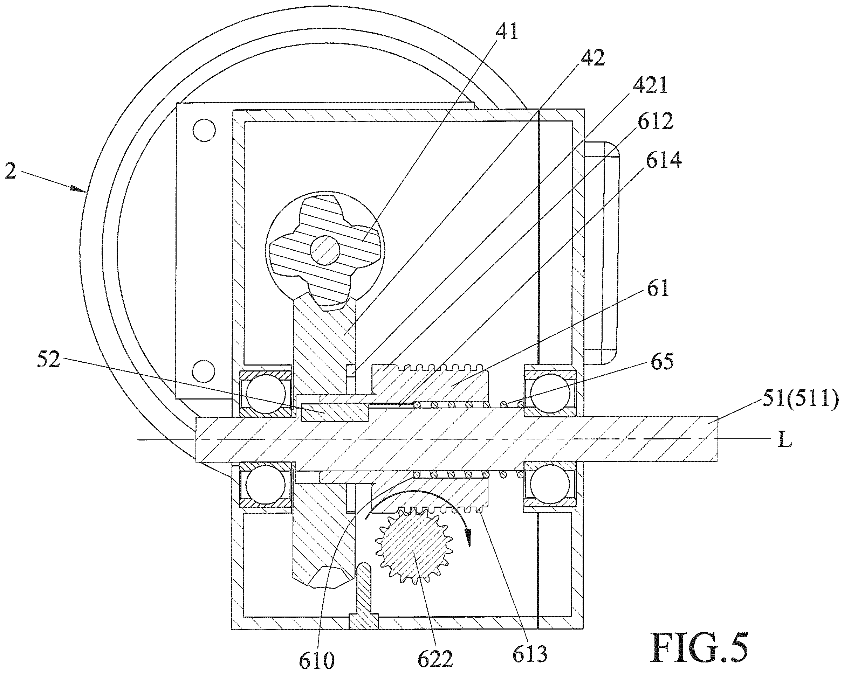

Further referring to FIGS. 4 and 5, the clutch unit 6 is disposed between the transmission unit 4 and the output unit 5, and includes a joint sleeve 61, and a switching rod 62.

The joint sleeve 61 is slidably sleeved on the output shaft 51, is rotatable about the axis (L) and has an inner surface formed with a keyway 614 extending along the axis (L). The portion of the transmission key 52 protruding radially and outwardly from the key way 512 extends into the keyway 614 of the joint sleeve 61 for allowing co-rotation of the joint sleeve 61 and the output shaft 51.

The switching rod 62 is rotatably mounted to the casing 31 and is operable to switch the joint sleeve 61 between a connection position, where the joint sleeve 61 engages the worm gear 42 to co-rotate therewith, and a separation position, where the joint sleeve 61 is separated from the worm gear 42.

Specifically, the joint sleeve 61 includes a sleeve body 611, a plurality of protruding portions 612 and an engaging portion 613. The sleeve body 611 is sleeved on the output shaft 51. The engaging portion 613 is formed on an outer surface of the sleeve body 611. The protruding portions 612 are angularly and equidistantly spaced apart from one another about the axis (L), protrude along the axis (L) from one end of the sleeve body 611 toward one of the surfaces 420 of the worm gear 42 that is formed with the indent portions 421, and respectively engage the indent portions 421 of the worm gear 42 when the joint sleeve 61 is at the connection position. Note that the number of the protruding portions 612 is the same as those of the indent portions 421 and is four in this embodiment. In this way, when the worm shaft 41 is driven by the motor 2 to rotate and the joint sleeve 61 is at the connection position, the worm gear 42 meshing with the worm shaft 41 drives the joint sleeve 61 to co-rotate therewith.

The switching rod 62 includes a shaft portion 621, a driving portion 622 and an operating portion 623. The shaft portion 621 is rotatably mounted to the casing 31. The driving portion 622 is connected co-rotatably to the shaft portion 621 and engages the engaging portion 613 of the joint sleeve 61 for moving the joint sleeve 61 between the connection and separation positions when the switching rod 62 is rotated. The operating portion 623 is connected co-rotatably to the shaft portion 621, is disposed outside of the casing 31, and is accessible for driving the driving portion 622 via the shaft portion 621 to move the joint sleeve 61 between the connection and separation positions.

In this embodiment, the engaging portion 613 includes a plurality of annular grooves 615 spaced apart from one another along the axis (L) and formed in the outer surface of the sleeve body 611. The driving portion 622 of the switching rod 62 is a gear having a plurality of gear teeth each engageable with a corresponding one of the annular grooves 615 for moving the joint sleeve 61 between the connection and separation positions.

In one embodiment, the joint sleeve 61 has an inner surface formed with a shoulder wall portion 610 and the clutch unit 6 further includes a restoring member 65. The restoring member 65 is disposed between the joint sleeve 61 and the output shaft 51, is configured as a coiled compression spring in this embodiment, has opposite ends abutting respectively against the casing 31 and the shoulder wall portion 610 of the joint sleeve 61 and biases the joint sleeve 61 toward the worm gear 42 to the connection position. In this way, the joint sleeve 61 is prevented from separating from the worm gear 42.

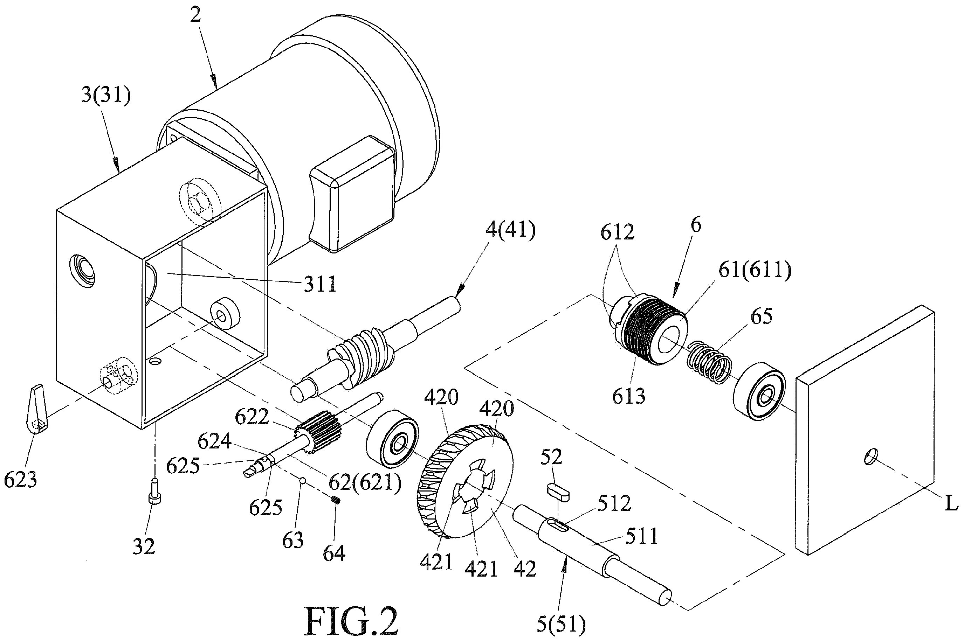

Referring back to FIG. 2, the clutch 6 further includes a positioning member 63 and a biasing member 64. The shaft portion 621 of the switching rod 62 is formed with an annular limiting groove 624 extending in a circumferential direction thereof and two cavities 625 formed in the limiting groove 624 diametrically opposite to each other about the axis (L). The positioning member 63 is disposed in the limiting groove 624 and is displaceable between the cavities 625 when the joint sleeve 61 is switched between the connection and separation positions. The biasing member 64 is also configured as a coiled compression spring, and is disposed between the positioning member 63 and the casing 31 for biasing the positioning member 63 into one of the concave notches 625. That is to say, the positioning member 63 is disposed in one of the concave notches 625 when the joint sleeve 61 is at the connection position, and is disposed in the other one of the concave notches 625 when the joint sleeve 61 is at the separation position.

As shown in FIG. 4, the joint sleeve 61 is biased by the restoring member 65 to the connection position to allow the motor 2 drives the output unit 5 to rotate. When the motor 2 starts to rotate, the motor 2 sequentially drives the worm shaft 41, the worm gear 42, the joint sleeve 61, the transmission key 52 and the output shaft 51 to rotate so as to output rotational energy.

To stop rotation of the output shaft 51 resulting from the motor 2, the operating portion 623 is operated to drive the driving portion 622 engaging the engaging portion 613 of the joint sleeve 61 to rotate and thus the joint sleeve 61 is moved away and separated from the worm gear 42 along the axis (L), in such a manner that the protruding portions 612 of the joint sleeve 61 disengage from the indent portions 421 of the worm gear 42 and the thus joint sleeve 61 is switched to the separation position. At this time, the motor 2 drives only the worm shaft 41 and the worm gear 42 to rotate and the output shaft 51 which is not driven by the motor 2 slows down to stop. Note that the output shaft 51 can be driven to rotate independently from the motor 2 when the joint sleeve 61 is at the separation position.

Note that in one embodiment, a wall 311 (see FIG. 2) of the casing 31 that is parallel to the side surfaces 420 of the worm gear 42 abuts against a side of the worm gear 42,and the housing unit 3 further includes a limiting member 32 disposed fixedly in the casing 31 (see FIGS. 4 and 5) and abuts against an opposite side of the worm gear 42 for preventing the worm gear 42 from being moved along the axis (L) when the joint sleeve 61 is switched between the connection and separation positions.

As compared to the conventional approach that employs a DC braking module to stop the force transmission from a motor to a transmission device, in the present disclosure, the operating portion 623 can be operated to separate the joint sleeve 61 from the worm gear 42 to thereby interrupt rotational force transmission from the motor 2 to the output shaft 51 without the need of additional electricity for driving a DC braking module. Thus, an energy conservation effect can be achieved.

Additionally, when it is required to rotate the output shaft 51 for performing repairing or trouble shooting operation on the output unit 5, the joint sleeve 61 can be switched to the separation position, so that the output shaft 51 can be rotated independently from the rotor (not shown) of the motor 2 and less effort for rotating the output shaft 51 is required. Further, the limiting member 32 prevents the worm gear 42 from being moved along the axis (L) when the joint sleeve 61 is switched between the connection and separation positions. Finally, the positioning member 63 biased by the biasing member 64 and displacing between the cavities 625 formed in the limiting groove 624 facilitates the operating portion 623 of the switching rod 62 to be moved to desired positions when the joint sleeve 61 is switched between the connection position and the separation position.

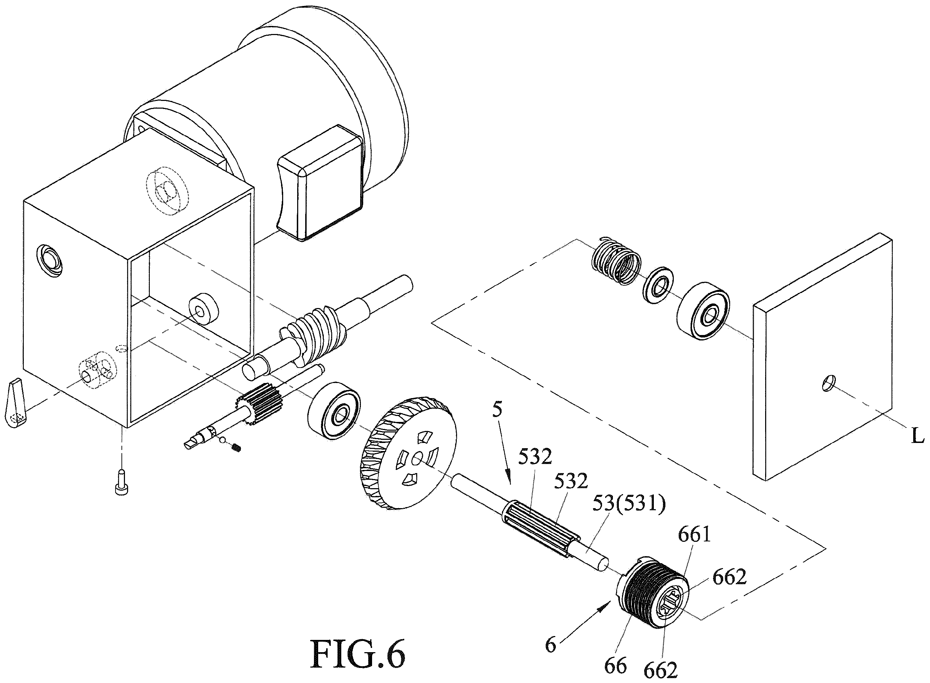

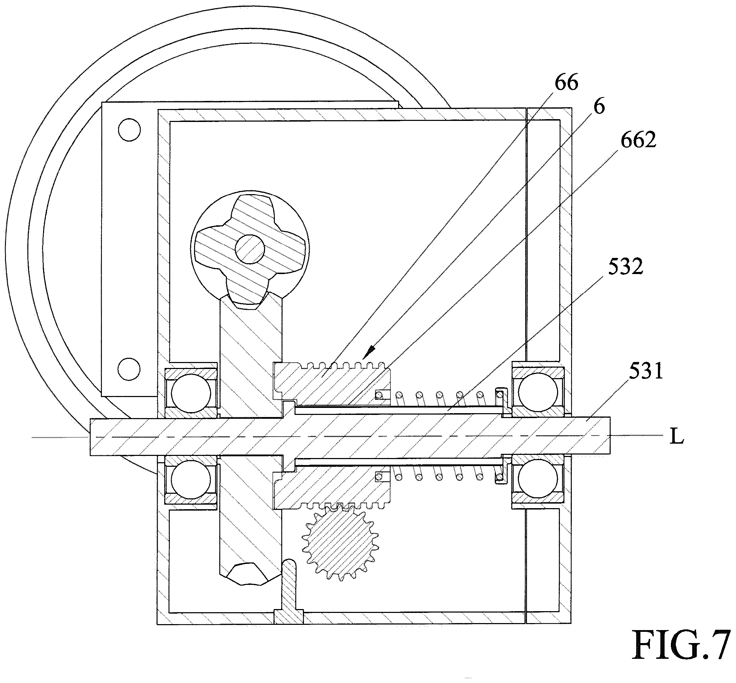

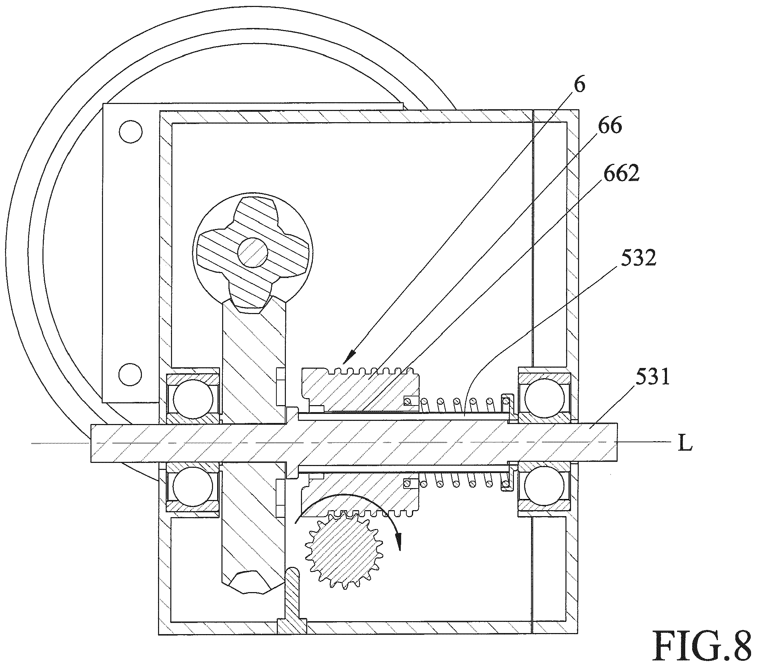

Referring to FIGS. 6 to 8, a clutch transmission device according to a second embodiment of the present disclosure is shown. The second embodiment is similar to the first embodiment and the differences therebetween resides in the following. In the second embodiment, the output unit 5 includes an output shaft 53 for substituting the output shaft 51 in the first embodiment and the transmission key shown in FIG. 2 is omitted. The output shaft 53 includes a shaft body 531 extending along the axis (L) and a plurality of spline teeth 532 formed on an outer surface of the shaft body 531 and angularly spaced apart from one another about the axis (L) . The clutch unit 6 includes a joint sleeve 66 for substituting the joint sleeve 61 shown in FIG. 2. The joint sleeve 66 includes a sleeve body 661 sleeved on the shaft body 531 and having an inner surface that is formed with a plurality of spline grooves 662 meshing with the spline teeth 532 of the output shaft 53 so as to allow the output shaft 53 to co-rotate with the joint sleeve 66. In this embodiment, the spline grooves 662 and the spline teeth 532 extend along the direction of the axis (L). In this way, the clutch transmission device of the second embodiment has the same advantages as the first embodiment.

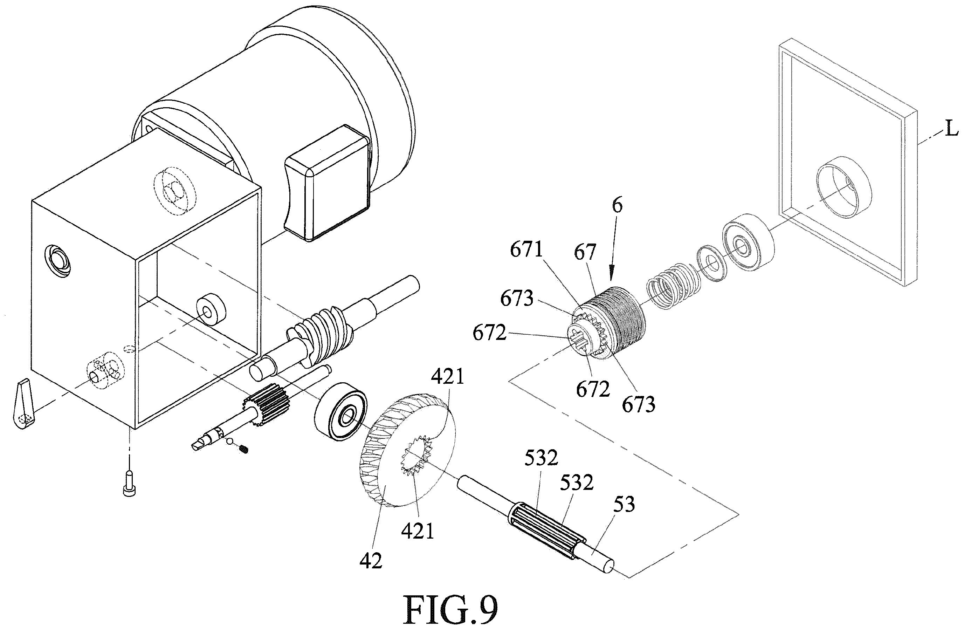

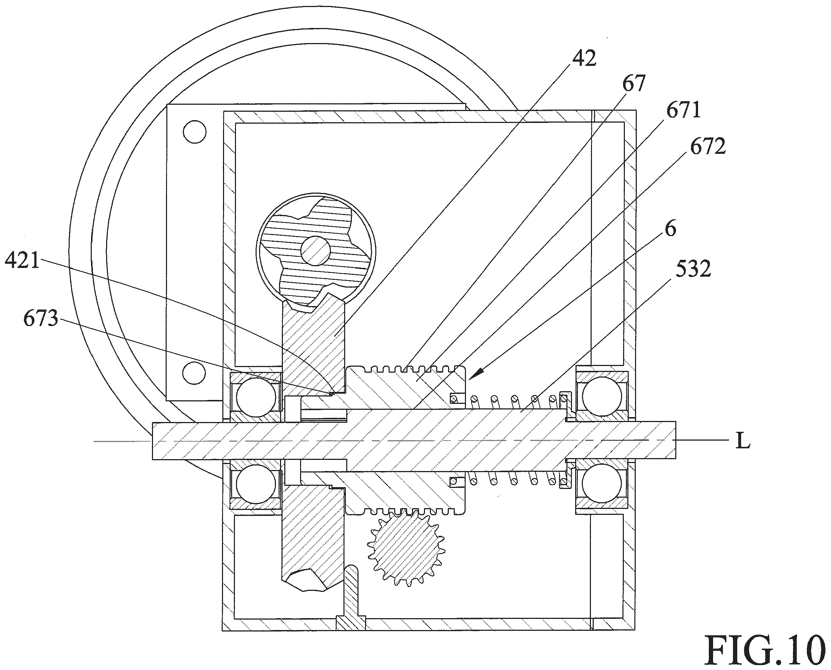

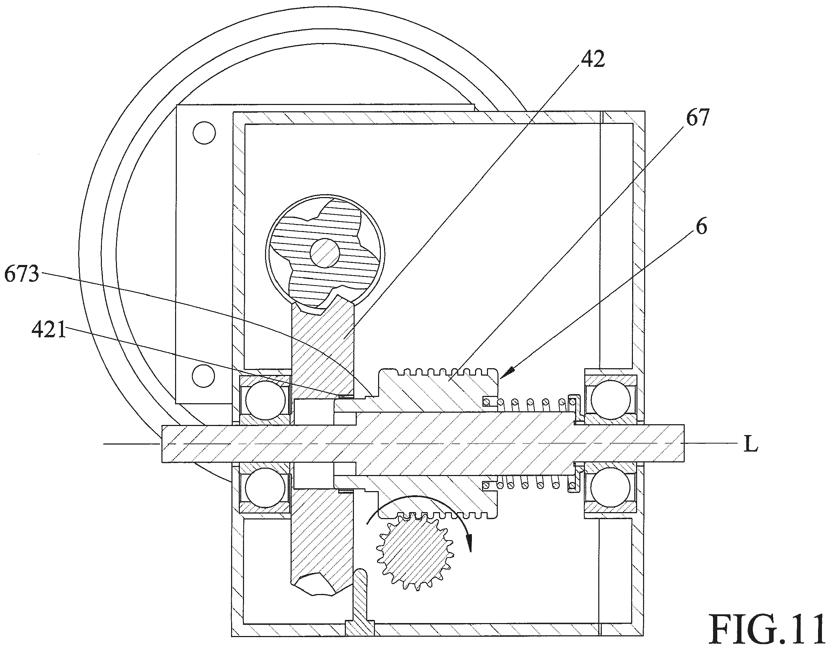

Referring to FIGS. 9 to 11, a clutch transmission device according to a third embodiment of the present disclosure is shown. The third embodiment is similar to the second embodiment and the differences therebetween resides in the following. In the third embodiment, the clutch unit 6 includes a joint sleeve 67 for substituting the joint sleeve 66 shown in FIG. 6. The joint sleeve 67 includes a sleeve body 671 configured as a cylinder, sleeved on the output shaft 53, having an inner surface that is formed with a plurality of spline grooves 672 meshing with the spline teeth 532 of the output shaft 53 so as to allow the output shaft 53 to co-rotate with the joint sleeve 67. In this embodiment, the protruding portions 612 shown in FIG. 2 are omitted, and the joint sleeve 67 includes a plurality of meshing portions 673 for substituting the protruding portions 612. The meshing portions 673 are angularly and equidistantly spaced apart from one another about the axis (L), and constitute a gear sleeved on the sleeve body 671.

In this embodiment, the indent portions 421 mesh with the meshing portions 673 when the joint sleeve 67 is at the connection position. In this way, the clutch transmission device of the third embodiment has the same advantages as the first embodiment.

To sum up, by virtue of the configurations of the switching rod 62, the joint sleeve 61, 66 or 67 can be switched easily between the connection position and the separation position so as to enable or disable the output shaft 51 or 53 being driven to rotate by the motor 2. Further, no electricity is required when the joint sleeve 61, 66 or 67 is switching between the connection position and the separation position, such that an energy conservation effect can be achieved. When the joint sleeve 61, 66 or 67 is at the separation position, the output shaft 51 or 53 can be rotated independently from the motor 2 and thus less effort for rotating the output shaft 51 or 53 is required for maintenance of the output unit 5.

In the description above, for the purposes of explanation, numerous specific details have been set forth in order to provide a thorough understanding of the embodiments. It will be apparent, however, to one skilled in the art, that one or more other embodiments may be practiced without some of these specific details . It should also be appreciated that reference throughout this specification to "one embodiment," "an embodiment," an embodiment with an indication of an ordinal number and so forth means that a particular feature, structure, or characteristic may be included in the practice of the disclosure . It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A clutch transmission device, comprising:
a housing unit (3) including a casing (31);
a motor (2) disposed in said casing (31);
a transmission unit (4) including a worm shaft (41) disposed in said casing (31) and driven by said motor (2) to rotate, and a worm gear (42) meshing with said worm shaft (41); and
an output unit (5) including an output shaft (51) extending along an axis (L) and rotatable about the axis (L) ;
**characterized by** a clutch unit (6) disposed between said transmission unit (4) and said output unit (5), and including a joint sleeve (61) slidably sleeved on said output shaft (51) and rotatable about the axis (L), and a switching rod (62) rotatably mounted to said casing (31) and operable to switch said joint sleeve (61) between a connection position, where said joint sleeve (61) engages said worm gear (42) to co-rotate therewith, and a separation position, where said joint sleeve (61) is separated from said worm gear (42).

2. The clutch transmission device as claimed in Claim 1, chartered in that said worm gear (42) has two side surfaces (420) opposite to each other along the axis (L), one of said surfaces (420) that faces toward said joint sleeve (61) being formed with a plurality of indent portions (421) which are angularly and equidistantly spaced apart from one another about the axis (L), said joint sleeve (61) including a sleeve body (611) that is sleeved on said output shaft (51) and a plurality of protruding portions (612) that are angularly and equidistantly spaced apart from one another about the axis (L), that protrude from one end of said sleeve body (611) toward said worm gear (42) along the axis (L), and that respectively engage said indent portions (421) of said worm gear (42) when said joint sleeve (61) is at the connection position.

3. The clutch transmission device as claimed in Claim 2, further **characterized in that** said joint sleeve (61) includes an engaging portion (613) formed on an outer surface of said sleeve body (611), and said switching rod (62) includes a shaft portion (621) rotatably mounted to said casing (31), a driving portion (622) connected co-rotatably to said shaft portion (621), engaging said engaging portion (613) of said joint sleeve (61) for moving said joint sleeve (61) between the connection and separation positions when said switching rod (62) is rotated, and an operating portion (623) connected co-rotatably to said shaft portion (621) and accessible for driving said driving portion (622) via said shaft portion (621) to move said joint sleeve (61) between the connection and separation positions.

4. The clutch transmission device as claimed in Claim 3, further **characterized in that** said engaging portion (613) includes a plurality of annular grooves (615) spaced apart from one another along the axis (L) and formed in said outer surface of said sleeve body (611), said driving portion (622) of said switching rod (62) being a gear having a plurality of gear teeth each engageable with a corresponding one of said annular groove (615) for moving said joint sleeve (61) between the connection and separation positions when said switching rod (62) is rotated.

5. The clutch transmission device as claimed in Claim 3 or 4, further **characterized in that** said shaft portion (621) of said switching rod (62) is formed with an annular limiting groove (624) extending in a circumferential direction thereof and two cavities (625) formed in said limiting groove (624) diametrically opposite to each other about the axis (L), said clutch unit (6) further including a positioning member (63) that is disposed in said limiting groove (624) and that is displaceable between said cavities (625) when said joint sleeve (61) is switched between the connection and separation positions, and a biasing member (64) that is disposed between said positioning member (63) and said casing (31) for biasing said positioning member (63) into one of said concave notches (625) .

6. The clutch transmission device as claimed in any one of Claims 1 to 5, further **characterized in that** said joint sleeve (61) has an inner surface formed with a shoulder wall portion (610), said clutch unit (6) further including a restoring member (65) disposed between said joint sleeve (61) and said output shaft (51), having opposite ends abutting respectively against said casing (31) and said shoulder wall portion (610) of said joint sleeve (61) and biasing said joint sleeve (61) toward said worm gear (42) to the connection position.

7. The clutch transmission device as claimed in any one of Claims 1 to 6, further **characterized in that** said joint sleeve (61) has an inner surface formed with a keyway (614) extending along the axis (L), said output shaft (51) including a shaft body (511) that extends along the axis (L), and that is formed with a keyway (512) extending along the axis (L), said output unit (5) further including a transmission key (52) that is inserted into said keyways (512) of said joint sleeve (61) and said output shaft (51) for allowing for co-rotation of said joint sleeve (61) and said output shaft (51).

8. The clutch transmission device as claimed in any one of Claims 1 to 6, further **characterized in that** said output shaft (53) includes a shaft body (531) extending along the axis (L) and a plurality of spline teeth (532) formed on an outer surface of said shaft body (531) and angularly spaced apart from one another about the axis (L), said joint sleeve (66) including a sleeve body (661) that is sleeved on said shaft body (531) and that has an inner surface formed with a plurality of spline grooves (662) meshing with said spline teeth (532) so as to allow said output shaft (53) to co-rotate with said joint sleeve (66).

9. The clutch transmission device as claimed in any one of Claims 1 to 8, further **characterized in that** said casing (31) has a wall (311) abutting against a side of said worm gear (42), and said housing unit (3) further includes a limiting member (32) disposed fixedly in said casing (31) and abutting against an opposite side of said worm gear (42) for preventing said worm gear (42) from being moved along the axis (L).
